# EUROPÄISCHE PATENTSCHRIFT

(11) **EP 1 342 043 B1**
(45) Veröffentlichungstag und Bekanntmachung des Hinweises auf die Patenterteilung: **03.01.2007**
(21) Anmeldenummer: 01985342.3
(22) Anmeldetag: 27.11.2001
(51) Int. Cl.: F27B 15/08, F27D 3/00

(54) **VERFAHREN ZUM EINTRAGEN VON KÖRNIGEM ERZ IN EINEN RÖSTOFEN**
METHOD FOR INTRODUCING A GRANULAR ORE INTO A ROASTING KILN
PROCEDE POUR INTRODUIRE UN MINERAI EN GRAINS DANS UN FOUR DE GRILLAGE

(30) Priorität: 06.12.2000 DE 10060516
(43) Veröffentlichungstag der Anmeldung: 10.09.2003
(73) Patentinhaber: Outokumpu Technology Oyj, 02200 Espoo (FI)
(72) Erfinder: STRÖDER, Michael, 61267 Neu-Anspach (DE); ZINGREBE, Horst, 65205 Wiesbaden (DE); VOLLMER, Hubert, 61462 Königstein (DE)
(74) Vertreter: KEIL & SCHAAFHAUSEN Patentanwälte
(86) Internationale Anmeldenummer: PCT/EP2001/013784
(87) Internationale Veröffentlichungsnummer: WO 2002/046673

(56) Entgegenhaltungen:
- US-A- 3 610 182
- PATENT ABSTRACTS OF JAPAN vol. 007, no. 074 (M-203), 26. März 1983 (1983-03-26) & JP 58 002141 A (ISEKI NOKI KK), 7. Januar 1983 (1983-01-07)

## Beschreibung

Die Erfindung betrifft ein Verfahren zum Eintragen von körnigem Erz in einen Ofen zum Rösten des Erzes bei Temperaturen von 400 bis 1050 °C, wobei das Erz im Ofen ein stationäres Wirbelbett bildet. Bei der Erwähnung von Erz sind Erzkonzentrate hier mit umfasst.

Das Rösten des Erzes ist ein exothermer Vorgang. Üblicherweise sind Kühlbündel in der stationären Wirbelschicht angeordnet, um das Wirbelbett zu kühlen und auf der gewünschten Temperatur zu halten. Die Quervermischung.des Feststoffs ist in der stationären Wirbelschicht relativ schwach ausgeprägt; sie wird durch die Kühlbündel weiter behindert. Das führt dazu, dass das Wirbelbett an der Eintragsstelle des Erzes heißer wird als an Stellen, wo kein Erz zugeführt wird. Darüber hinaus entsteht an der Eintragsstelle des Erzes durch Reaktion des Sulfidschwefels mit Luftsauerstoff viel Schwefeldioxid, während an Stellen, wo wenig oder kein Erz zugeführt wird, wenig Schwefeldioxid entstehen kann, so dass auch nur wenig des angebotenen Luftsauerstoffs für das Rösten verbraucht wird. Im Ofenraum oberhalb des stationären Wirbelbetts herrschen zumeist Temperaturen über 900 °C und die Gasgeschwindigkeiten liegen unter 1 m / sec.

Wegen der hohen Viskosität der Gase tritt kaum Vermischung zwischen schwefeldioxidreichen und schwefeldioxidarmen Gassträhnen auf. Es kommt im Ofenraum deshalb zu ausgeprägten Inhomogenitäten bezüglich Temperatur, Schwefeldioxidkonzentration und Sauerstoffkonzentration. In Gassträhnen, die arm an Schwefeldioxid aber reich an Sauerstoff sind, kommt es bevorzugt zur unerwünschten Sulfatisierung des Feststoffs. Dies führt zur Verschlechterung des Produkts, ferner neigt sulfatisierter Staub zur Bildung von Belägen an den Rohren nachgeschalteter Abhitzekessel, die nur schwer zu entfernen sind. Dadurch wird der Wärmetransport vom Röstgas zum Kesselrohr behindert, es wird der Aufwand für die Wartung des Kessels erhöht und seine Verfügbarkeit verringert.

Der Erfindung liegt die Aufgabe zu Grunde, das zu röstende Erz annähernd gleichmäßig von außen auf das stationäre Wirbelbett zu verteilen. Dabei soll dieses Eintragen in möglichst kostengünstiger und betriebssicherer Weise erfolgen. Erfindungsgemäß gelingt dies dadurch, dass man das Erz durch eine über dem Wirbelbett angeordnete Öffnung im Ofengehäuse auf das Wirbelbett schleudert, wobei das Erz durch Flügel eines drehenden Schleuderrades beschleunigt wird, welches sich außerhalb des Ofens in der Nähe der Öffnung befindet. Die Öffnung im Ofengehäuse ist üblicherweise in einer Seitenwand des Gehäuses angeordnet. Bei einem Ofen mit großem Durchmesser ist es möglich, im Ofengehäuse mehrere Öffnungen vorzusehen und diesen Öffnungen jeweils Schleuderräder zuzuordnen.

Durch das erfindungsgemäße Verfahren wird eine wesentlich verbesserte Homogenität der Temperaturen im Wirbelbett und auch im Ofenraum oberhalb des Wirbelbettes erreicht. Gleichzeitig entsteht eine homogenere Verteilung der Schwefeldioxid- und Sauerstoffkonzentrationen im Ofenraum. Die unerwünschte Sulfatisierung von Staub wird behindert und dadurch die Produktqualität und auch der Betrieb des nachgeschalteten Abhitzekessels verbessert.

Zweckmäßigerweise bildet man die Drehzahl des Schleuderrades variabel aus, um beim Eintragen die Wurfweite variieren zu können. Zweckmäßig ist ferner, das Schleuderrad gegenüber dem Ofen schwenkbar oder verschiebbar auszubilden, wodurch sich die Schleuderrichtung für das Erz variieren lässt. Die Verschiebbarkeit des Schleuderrades kann auch bei Wartungsarbeiten vorteilhaft sein. Die Schwenkbarkeit des Schleuderrades kann man z. B. dadurch erzeugen, dass das Schleuderrad auf einer vertikalen, drehbaren Achse montiert ist. Anstelle der Achse kann auch eine horizontale Schiene vorgesehen sein, auf welcher das Schleuderrad mittels einer verschiebbaren Tragvorrichtung angeordnet ist.

Dem Ofen gibt man zum Rösten körniges Erz auf, z. B. Zinkblende, Golderz oder Pyrit oder Konzentrate dieser Erze. Die Erze können z.B. vor dem Rösten granuliert sein.

Ausgestaltungsmöglichkeiten des Verfahrens werden mit Hilfe der Zeichnung erläutert. Es zeigt:
Figur 1 einen vertikalen Schnitt durch einen Röstofen mit zugehörigem Schleuderrad und
Figur 2 eine Ausführungsform des Schleuderrads, gegen die Schleuderrichtung gesehen.

Der Röstofen (1) weist ein Gehäuse mit einem unteren, etwa zylindrischen Gehäuseteil (2a) und einem oberen, erweiterten Gehäuseteil (2b) auf. Das zu röstende Erz bildet ein stationäres Wirbelbett (3) auf einem Rost (4), durch den Fluidisierungsluft aus der Verteilkammer (5) kommend aufwärts hindurchtritt. Die Luft, die vorzugsweise vorgewärmt ist, wird in der Leitung (6) herangeführt. Falls nötig, wird durch die Leitung (7) oder auch durch mehrere Leitungen Zusatzbrennstoff, der fest, flüssig oder gasförmig sein kann, in das Wirbelbett (3) geführt. Abgas zieht im Kanal (8) ab und wird einer nicht dargestellten Entstaubung, Kühlung und Reinigung zugeführt. Einen Teil des Röstprodukts erhält man über den Kanal (8), einen anderen Teil über die Abzugsleitung (8a).

Das zu röstende Erz, welches feucht sein kann, wird über ein Förderband (10) herangeführt und eine Stachelwalze (11) dient dazu, Klumpen zu zerteilen. Das Erz fällt dann durch einen Schacht (12) in einen Trog (13) und wird von einem drehenden Schleuderrad (14) erfasst. Die Drehrichtung des Rades (14) ist durch den Pfeil (15) angedeutet. Die Flügel (14a) des Schleuderrades erfassen das körnige Erz und schleudern es durch die Öffnung (16) im unteren Gehäuseteil (2a) auf das Wirbelbett (3).

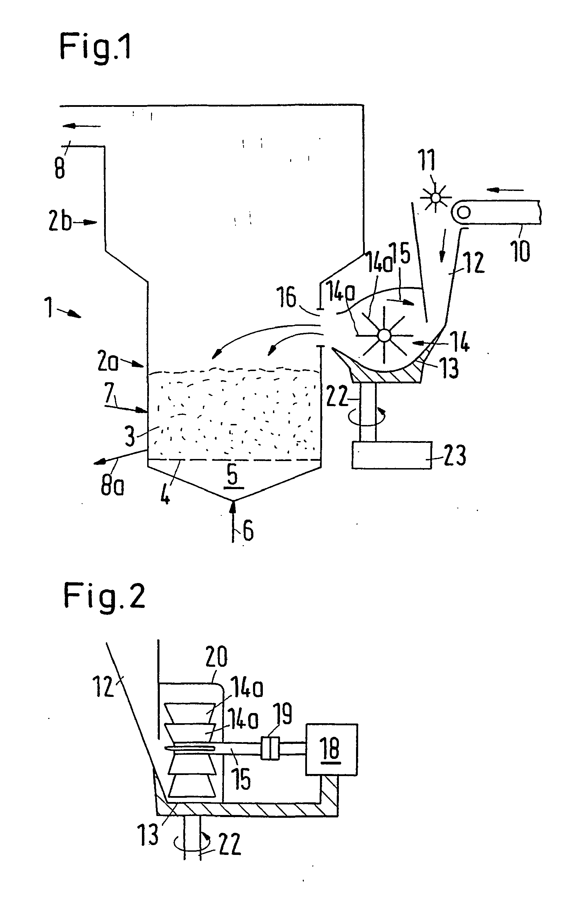

Figur 2 zeigt in Ansicht die Flügel (14a) des Schleuderrades, die zum Rad gehörende horizontale Welle (15), auf denen die Flügel befestigt sind, und den Motor (18) für den Antrieb der Welle (15), wobei eine Kupplung (19) dazwischengeschaltet ist. Der Trog (13) ist, gemäß Figur 2, zu einer Tragvorrichtung auch für den Motor (18) ausgebildet. Das Schleuderrad ist teilweise von einem Gehäuse (20) umgeben.

Das Schleuderrad (14) mit dem Trog (13), dem Motor (18), dem Kanal (12), der Welle (15) und Kupplung (19) sind gemeinsam bewegbar ausgebildet, so dass die Schleuderrichtung des Schleuderrades (14) veränderbar ist. Hierzu dient eine vertikale Stütze (22) für diese Teile, wobei diese Stütze von einem ortsfesten Antrieb (23) aus um ihre vertikale Längsachse schwenkbar ist. Eine weitere Variationsmöglichkeit besteht darin, dass man die Drehzahl des Schleuderrades variieren kann, wodurch die Wurfweite des Erzes, welches durch die Öffnung (16) auf das Wirbelbett (3) geschleudert wird, geändert werden kann. Auf diese Weise lässt sich das Eintragen des Erzes auf das Wirbelbett variabel gestalten und praktisch die gesamte Oberfläche des Wirbelbettes mit zu röstendem Erz belegen.

Zwischen der Gehäuseöffnung (16) und dem Auslass des Schleuderrades (14), der zwischen dem Trog (13) und dem oberen Gehäuseteil (20) liegt, kann z.B. ein rohrartiger, flexibler Balg angeordnet sein, um den Austritt von Staub zu verhindern. Der besseren Übersichtlichkeit wegen wurde dieser Balg in der Zeichnung weggelassen.

### Beispiel:

In einer der Zeichnung entsprechenden Anlage wird folgendermaßen gearbeitet:

Ein großer Röstofen für Zinkblendekonzentrat (Korngrößen: 98 Gew.-% kleiner 50µm) hat einen Innendurchmesser von 12,5 m, er enthält eine stationäre Wirbelschicht, in der das Zinkblendekonzentrat bei etwa 950 °C geröstet wird. Wegen der feuerfesten Ausmauerung ist die Ofenwand 450 mm dick. Dem Röstofen werden kontinuierlich 40 t/h Konzentrat mit einer mittleren Feuchte von 8 Gew.-% aufgegeben.

Ein Schleuderrad (14) mit einem Nabendurchmesser von 400 mm mit 6 Flügeln (14a) von 250 mm Breite und 80 mm Höher fördert diesen Massenstrom in den Ofen. Die Distanz der Schwenkachse (22) von der Ofenmitte beträgt 7,2 m. Das drehende Schleuderrad fördert das Erzkonzentrat in den Ofen, dabei streut es sowohl seitlich als auch in Wurfrichtung. Im Ofen bildet sich ein Erzhaufen, dessen höchster Punkt im weiteren zur Beschreibung des Wurfverhaltens herangezogen und als Wurfpunkt bezeichnet wird. Die Entfernung des Wurfpunkts von der Schwenkachse wird als Wurfweite bezeichnet. Die Drehzahl des Antriebs (18) wird so variiert, dass die kleinste Wurfweite 3,2 m und die größte Wurfweite 11,2 m beträgt. Der horizontale Öffnungswinkel des Streubereichs beträgt etwa 25°; bei einer Wurfweite von 7,2 m ist der Erzhaufen etwa 3,2 m breit. Schwenkt man das Schleuderrad um ± 28° aus seiner Mittellage und stellt die Wurfweite auf etwa 8,2 m ein, erreicht man auch die Seitenbereiche des Ofens. Drehzahl und Schwenkbewegung werden nun gleichzeitig variiert, so dass der Wurfpunkt im Ofen etwa eine Kreisbahn um die Ofenmitte beschreibt, wobei der Durchmesser der Kreisbahn 8,0 m beträgt. Die Zeit für einen Umlauf auf der Kreisbahn beträgt 10 min. Dadurch wird eine ziemlich gleichmäßige Verteilung des Erzkonzentrats über den Ofenquerschnitt erreicht.

## Patentansprüche

1. Verfahren zum Eintragen von körnigem Erz in einen Ofen zum Rösten des Erzes bei Temperaturen von 400 bis 1050 °C, wobei das Erz im Ofen ein stationäres Wirbelbett bildet, **dadurch gekennzeichnet, dass** man das Erz durch eine über dem Wirbelbett angeordnete Öffnung im Ofengehäuse auf das Wirbelbett schleudert, wobei das Erz durch Flügel eines drehenden Schleuderrades beschleunigt wird, welches sich außerhalb des Ofens in der Nähe der Öffnung befindet.

2. Verfahren nach Anspruch 1, **dadurch gekennzeichnet, dass** die Drehzahl des Schleuderrades variabel ist.

3. Verfahren nach Anspruch 1 oder 2, **dadurch gekennzeichnet, dass** das Schleuderrad gegenüber dem Ofen verschiebbar und/oder schwenkbar ist.

4. Verfahren nach Anspruch 3, **dadurch gekennzeichnet, dass** das Schleuderrad auf einer verschiebbaren Tragvorrichtung angeordnet ist.

5. Verfahren nach Anspruch 1 oder einem der folgenden, **dadurch gekennzeichnet, dass** dem Ofen Zinkblende, Golderz oder Pyrit oder Konzentrate dieser Erze aufgegeben wird.

6. Verfahren nach Anspruch 1 oder einem der folgenden, **dadurch gekennzeichnet, dass** man das Erz über mindestens zwei Schleuderräder mit zugehörigen Öffnungen in den Ofen einträgt.

## Claims

1. A process of introducing granular ore into a furnace for calcining the ore at temperatures of 400 to 1050°C, the fore forming a stationary fluidized bed in the furnace, **characterized in that** the ore is thrown onto the fluidized bed through an opening in the furnace housing disposed above the fluidized bed, the ore being accelerated by blades of a rotating impeller which is disposed outside the furnace in the vicinity of the opening.

2. The process as claimed in claim 1, **characterized in that** the rotational speed of the impeller is variable.

3. The process as claimed in claim 1 or 2, **characterized in that** the impeller is movable and/or pivotable with respect to the furnace.

4. The process as claimed in claim 3, **characterized in that** the impeller is disposed on a movable supporting device.

5. The process as claimed in claim 1 or any of the preceding claims, **characterized in that** zinc blende, gold ore or pyrite or concentrates of these ores are charged into the furnace.

6. The process as claimed in claim 1 or any of the preceding claims, **characterized in that** the ore is introduced into the furnace by means of at least two impellers with associated openings.

## Revendications

1. Procédé pour introduire un minerai en grain dans un four de grillage aux température entre 400 et 1050°C, le minerai formant un lit fluidisé dans le four, **caractérisé en ce que** le minerai est jeté sur le lit fluidisé à travers d'une ouverture dans le boîtier du four disposée sur le lit, le minerai étant accéléré par des ailes d'une roue porte-fourches tournante se trouvant à l'extérieure du four près de l'ouverture.

2. Procédé selon la revendication 1, **caractérisé en ce que** le nombre de tours de la roue porte-fourches est variable.

3. Procédé selon les revendications 1 ou 2, **caractérisé en ce que** la roue porte-fourches est décalable et/ou pivotante vis-à-vis le four.

4. Procédé selon la revendication 3, **caractérisé en ce que** la roue porte-fourches est disposée sur un support décalable.

5. Procédé selon la revendication 1 ou selon l'une des revendications suivantes, **caractérisé en ce** du galène blende, minerai d'or ou pyrite de fer ou produits concentrés sont amenés au four.

6. Procédé selon la revendication 1 ou selon l'une des revendications suivantes, **caractérisé en ce que** le minerai est introduit au four à travers d'au moins deux roues porte-fourches prévues des ouvertures appartenantes.
